# EUROPEAN PATENT SPECIFICATION

(11) **EP 2 676 789 B1**
(45) Date of publication and mention of the grant of the patent: **15.07.2015**
(21) Application number: 13172693.7
(22) Date of filing: 19.06.2013
(51) Int. Cl.: B29D 30/48

(54) **Apparatus for manufacturing an annular bead core-apex subassembly and method of manufacturing such an assembly**
Vorrichtung zur Herstellung einer ringförmigen Wulst-Kern-Unterbaugruppe, und Verfahren zur Herstellung einer solchen Baugruppe
Appareil de fabrication de sous-assemblage de bourrage sur tringle annulaire et procédé de fabrication d'un tel ensemble

(30) Priority: 22.06.2012 US 201213530147
(43) Date of publication of application: 25.12.2013
(73) Proprietor: The Goodyear Tire & Rubber Company, Akron, Ohio 44316 (US)
(72) Inventor: Lemaire, Erich Nicolaus, L-9764 Marnach (LU); Kohnen, Daniel, 4790 Burg-Reuland (BE); De Monte, Patrice, 6700 Arlon (BE)
(74) Representative: Kutsch, Bernd

(56) References cited:
- EP-A1- 0 983 839
- EP-A1- 1 683 628
- DE-A1- 3 940 235
- DE-U1-202004 020 591
- JP-A- S63 154 334
- JP-A- 2011 235 525
- US-A- 5 100 497

## Description

### Field of the Invention

The invention relates to a bead core-apex subassembly as it may be used as a pre-assembled component in the manufacturing of a pneumatic tire. More particularly, it relates to an apparatus for manufacturing such an annular bead core-apex subassembly and a method of manufacturing such an annular bead core-apex subassembly.

### Background of the Invention

EP 1 123 198 B1 describes a bead core-apex subassembly and a tire comprising such an assembly. The apex filler is produced from an extruded strip of elastomeric material.

EP 1 165 306 B1 describes a combined bead loading and apex application system. A bead core-apex subassembly is manufactured, transferred onto a building drum and employed into a pneumatic tire.

US Patent Publication 2011/0146884 describes the mixing of rubber compounds for use in tire manufacturing and a method of applying a blended rubber composition on a substrate such as a tire building drum or a core.

US Patent Publication 2011/0146888 describes again the mixing of rubber compounds for use in tire manufacturing. It describes also a method of forming a rubber article comprising two or more layers, the method comprising the steps of extruding a first rubber compound through a first extruder and a first gear pump, applying one or more first strips of rubber of the mixture directly onto a substrate, mixing a second rubber compound, and applying one or more second strips of rubber of the second mixture. The rubber article may be an apex of a pneumatic tire, the apex comprising two or more layers of rubber.

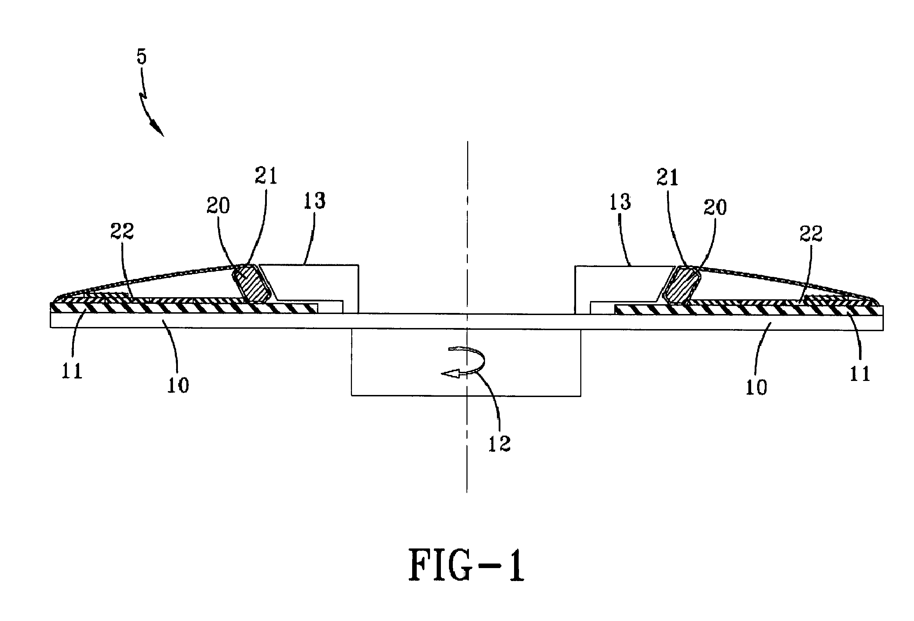

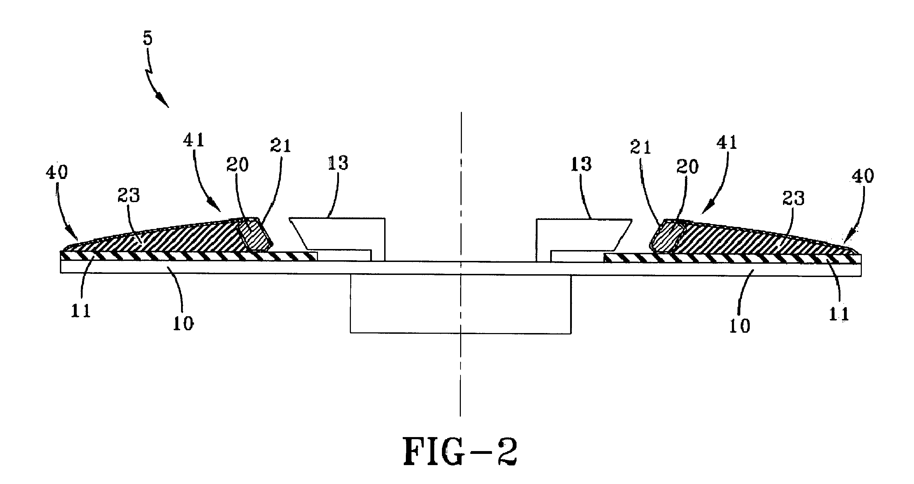

US Patent Publication 2004/0089400 describes a method and apparatus for forming an annular elastomeric tire component. An elastomer is extruded annularly onto a support surface and a strip of the elastomer material is shaped to a predetermined profile between a shaping die and the support surface. The method may be used to form multilayered components. Fig. 1 and Fig. 2 show a bead core-apex subassembly manufactured using this method.

US Patent 7,501,033 describes a method of manufacturing a bead core-apexchipper subassembly for use in a pneumatic tire. A continuous elastomeric strip is extruded on a support surface as an apex strip, a chipper ply strip is attached to the apex strip, and the chipper and apex subassembly is attached to an annular bead core.

EP 1 749 648 A2 describes a method and apparatus for applying a strip of elastomeric component to a surface. An apex may be shaped having a tip and a portion opposite the tip which is attached to a bead core. The apparatus comprises a nozzle in fluid communication with a pumping means and a shaping die. A tongue is rotatably mounted adjacent the nozzle to compress an elastomeric material applied through the nozzle as a strip onto a surface against said surface.

A challenge has been presented to provide an improved method of manufacturing a bead core-apex subassembly which may be automated and which is less labor and/or energy intensive than existing apexing processes. The method should also not negatively affect uniformity of a pneumatic tire comprising such a bead core-apex subassembly and even help to improve tire uniformity. At the same time, the method should not require the use of solvent based cements. A challenge has also been presented to provide an apparatus to implement such a method.

A further challenge has been presented to provide a method of manufacturing a pneumatic tire requiring fewer manufacturing steps in terms of incorporating a bead core and apex and, if appropriate, a flipper, in the pneumatic tire.

A further challenge has been presented to provide a method and an apparatus which allows for manufacturing tires with smaller apexes to reduce tire weight.

A further challenge has been presented to provide an improved bead core-apex subassembly which may be manufactured using this method and which may be easily adapted in its physical characteristics to specific tire performance requirements such as handling performance, durability performance and, if applicable, run-flat performance.

EP-A- 1 683 628 describes a tire manufacturing method for preset-beads. The method involves providing a preset bead-forming apparatus, a bead corepreparing station and a bead-handling robot, as well as transferring the preset-beads from the preset-bead forming apparatus to a preset bead-storage station. The handling robot comprises a disc-shaped arm comprising claw portions which expand/contract outwardly/inwardly to support the bead core with its L-shaped corners.

Further methods and devices for manufacturing and handling bead core-apex subassemblies are described in DE-U1- 20 2004 020 591, US-A- 5,100,497 and DE-A- 39 40 235.

### Summary of the Invention

The invention relates to an apparatus in accordance with claim 1 and to a method in accordance with claim 10.

Dependent claims refer to preferred embodiments of the invention.

In an example aspect of the invention, an apparatus for manufacturing an annular bead core-apex subassembly is provided, the apparatus comprising a first station at a first location having a first support surface and a second station at a second location having a second support surface, wherein the first support surface is mounted to a first support element and is rotatable on the first support element about an axis extending perpendicular to the first support surface, wherein the second support surface is mounted to a second support element and is rotatable on the second support element about an axis extending perpendicular to the second support surface, wherein the apparatus comprises a moving device configured for moving the first support surface from the first location to the second location and for moving the second support surface from the second location to either the first location or to a further location, wherein the apparatus comprises at least one handling device selected from the group consisting of (i) a loading device for positioning an annular bead core on the respective support surface at the first location, and (ii) an unloading device for removing an annular bead core-apex subassembly from the respective support surface at the first location, and wherein the apparatus comprises a first nozzle in fluid communication with a first pumping or extrusion device for discharging a first rubber compound onto a respective support surface at the second location.

In yet another example aspect of the invention, the apparatus further comprises a third station at a third location having a third support surface, wherein the third support surface is mounted to a third support element and is rotatable on the third support element about an axis extending perpendicular to the third support surface, wherein the moving device is configured for moving the first support surface from the first location to the second location, for moving the second support surface from the second location to the third location, and for either moving the third support surface from the third location to the first location or to a further location, wherein the handling device is a loading device for positioning an annular bead core on the respective support surface at the first location, and wherein the apparatus further comprises an unloading device for removing an annular bead core-apex subassembly from a respective support surface at the third location.

In still another example aspect of the invention, the apparatus comprises a third station at a third location having a third support surface, wherein the third support surface is mounted to a third support element and is rotatable on the third support element about an axis extending perpendicular to the third support surface, wherein the moving device is configured for moving the first support surface from the first location to the second location, for moving the second support surface from the second location to the third location, and for either moving the third support surface from the third location to the first location or to a further location, and wherein the apparatus comprises a second nozzle in fluid communication with a pumping or extrusion device for discharging a second rubber compound onto a respective support surface at the third location.

In yet another example aspect of the invention, the apparatus comprises a third station at a third location having a third support surface, wherein the third support surface is mounted to a third support element and is rotatable on the third support element about an axis extending perpendicular to the third support surface, wherein the apparatus further comprises a fourth station at a fourth location having a fourth support surface, wherein the fourth support surface is mounted to a fourth support element and is rotatable on the fourth support element about an axis extending perpendicular to the fourth support surface, wherein the moving device is configured for moving the first support surface from the first location to the second location, for moving the second support surface from the second location to the third location, for moving the third support surface from the third location to the fourth location, and for either moving the fourth support surface to the first location or to a further location, wherein the handling device is a loading device for positioning an annular bead core on a respective support surface at the first location, wherein the apparatus comprises an unloading device for removing an annular bead core-apex subassembly from a respective support surface at the fourth location, and wherein the apparatus comprises a second nozzle in fluid communication with a second pumping or extrusion device for discharging a second rubber compound onto a respective support surface at the third location.

In still another example aspect of the invention, the first and the second support surface is each a flat, disc-shaped support surface.

In yet another example aspect of the invention, the first support element is a first arm extending from a center, wherein the second support element is a second arm extending from said center, and wherein the first and second support element are rotatable about said center.

In still another example aspect of the invention, the first, second and third support surface is each a flat, disc-shaped support surface, wherein the first support element is a first arm extending from a center, wherein the second support element is a second arm extending from said center, wherein the third support element is a third arm extending from said center, and wherein the first, second and third support element are rotatable about said center.

In yet another example aspect of the invention, the first, second and third support surface is each a flat, disc-shaped support surface, wherein the first support element is a first arm extending from a center, wherein the second support element is a second arm extending from said center, wherein the third support element is a third arm extending from said center, and wherein the first, second and third support element are rotatable about said center.

In still another example aspect of the invention, the first, second, third and fourth support surface is each a flat, disc-shaped support surface, wherein the first support element is a first arm extending from a center, wherein the second support element is a second arm extending from said center, wherein the third support element is a third arm extending from said center, wherein the fourth support element is a fourth arm extending from said center, and wherein the first, second, third and fourth support element are rotatable about said center.

In yet another example aspect of the invention, the first, second, third and fourth arm are arranged about the center at an angular distance of substantially 90 degrees and wherein the first, second, third and fourth arm have a substantially equal length.

In still another example aspect of the invention, the first and second arm are arranged about the center at an angular distance of substantially 180 degrees and wherein the first and second arm have a substantially equal length.

In yet another example aspect of the invention, the first, second and third arm are arranged about the center at an angular distance of substantially 120 degrees and wherein the first, second and third arm have a substantially equal length.

In still another example aspect of the invention, the first, second and third arm are arranged about the center at an angular distance of substantially 120 degrees and wherein the first, second and third arm have a substantially equal length.

In yet another example aspect of the invention, the loading device is configured for holding a spacer disc on which an annular bead core is located and for moving this spacer disc with the annular bead core to the first support surface thereby positioning the annular bead core on the first support surface.

In still another example aspect of the invention, the unloading device is configured for holding a spacer disc on which a bead core-apex subassembly is located and for removing this spacer disc with the bead core-apex subassembly from the first support surface.

In yet another example aspect of the invention, the first pumping or extrusion device comprises a first gear pump.

In still another example aspect of the invention, the first pumping or extrusion device comprises a first gear pump and the second pumping or extrusion device comprises a second gear pump.

In yet another example aspect of the invention, the first nozzle is configured to provide the first rubber compound in the shape of a strip.

In still another example aspect of the invention, the first nozzle is configured to provide the first rubber compound in the shape of a strip and the second nozzle is configured to provide the first rubber compound in the shape of a strip.

In yet another example aspect of the invention, the first nozzle comprises a shaping element for bringing the discharged first rubber compound into a substantially triangular shape.

In still another example aspect of the invention, the second nozzle comprises a shaping element for bringing the discharged second rubber compound or the combination of the discharged first and second rubber compound into a substantially triangular shape.

In yet another example aspect of the invention, the first nozzle is moveable in a radial direction with respect to the annular bead core at the second station.

In still another example aspect of the invention, the second nozzle is moveable in a radial direction with respect to the annular bead core at the third station.

In yet another example aspect of the invention, the support surface comprises a stop or a clamping device for positioning or holding the bead core on the support surface.

In still another example aspect of the invention, a method of manufacturing an annular bead core-apex subassembly is provided. The method comprises: positioning an annular bead core on a support surface at a first station; moving the support surface with the annular bead core to a second station; rotating the support surface with the annular bead core at the second station about an axis extending perpendicular to the first support surface; discharging a first rubber compound onto the rotating support surface at the second station; establishing the annular bead core-apex subassembly; moving the support surface with the annular bead core-apex subassembly to a further station; and removing the annular bead core-apex subassembly from the support surface at the further station.

In yet another example aspect of the invention, the further station is the first station.

In still another example aspect of the invention, the method comprises: after discharging the first rubber compound onto the rotating support surface at the second station, moving the support surface with the discharged first rubber compound to a third station; rotating the support surface with the annular bead core at the third station about an axis extending perpendicular to the first support surface; and discharging a second rubber compound onto the rotating support surface at the third station.

In yet another example aspect of the invention, the further station is an unloading station different from the first station.

In still another example aspect of the invention, the annular bead core is positioned on a spacer disc and the annular bead core on the spacer disc is positioned on the support surface at the first station.

In yet another example aspect of the invention, the annular bead core-apex subassembly is established on the spacer disc and removed from the support surface at the further station together with the spacer disc.

The invention may be used to manufacture a bead core-apex subassembly comprising an annular bead core, a flipper and an apex, wherein the flipper is wrapped about the bead core such that it encloses the bead core, and wherein the apex is in contact with the flipper. In one example, the apex may comprise a first segment and a second segment, the first segment having a composition different from the composition of the second segment.

The bead core may be a conventional bead core and may comprise, for instance, one or more steel wires. The flipper may be a conventional flipper as used in tire manufacturing. It may be a fabric or a reinforced rubber ply. The apex may have a substantially triangular shape and extends from the flipper to an apex tip.

If the apex has a first and a second segment, at least one of the cross-section of the first segment and the cross-section of the second segment may have a substantially triangular shape. In this case, only the first segment of the apex may be in contact with the flipper. In this case, the first segment comprises a first rubber composition and the second segment comprises a second rubber composition wherein the shore A hardness of the first rubber composition may differ by at least 3, alternatively by at least 5 or at least 10, from the shore A hardness of the second rubber composition and/or wherein the shore A hardness of the first segment may be larger, by at least 3 larger, than the shore A hardness of the second segment.

The invention may also be used to practice a method of manufacturing a bead core-apex subassembly, the method comprising the steps of providing an annular bead core; wrapping a flipper about the annular bead core such that the flipper encloses the bead core; positioning the bead core with the flipper wrapped about the bead core on a rotatable support surface; providing a nozzle in fluid communication with a pumping or extrusion device; rotating the support surface about an axis; and discharging a rubber compound through the nozzle onto the rotating support surface and forming an apex from the discharged rubber compound, the apex being attached to the flipper. In this method, the apex may be shaped into a substantially triangular shape while or after discharging the rubber compound onto the rotating support surface, the apex extending from a base to a tip, the base being attached to the flipper. The pumping or extrusion device may comprise a gear pump. The nozzle may comprise a tongue, the tongue compressing the rubber compound against at least one of the rotating support surface and the bead core with the flipper wrapped about the bead core. The rotatable support surface rotates by substantially 360 degrees or more during discharge of the rubber compound. The rubber compound may be discharged substantially in the shape of a strip onto the rotating support surface. The nozzle may be moved radially relative to the annular bead core located on the support surface while discharging the strip rubber compound. Hence, the apex may be formed from one or more rubber strips discharged through one or more nozzles onto the rotating support surface.

In still another example aspect of the invention, the support surface rotates horizontally and the axis of rotation is perpendicular to the support surface.

### Definitions

"Bead Core" generally means one or more annular tensile members that are associated with holding the tire to the rim. Often, the bead core is made from one or more steel wires wound to the bead core. The bead core may have various cross-sections such as round or hexagonal.

"Apex" or the equivalent term "bead filler apex" means an elastomeric filler structure which is located radially above the bead core and between the plies in a pneumatic tire.

"Flipper" refers to a reinforcing fabric for placing about the bead core for strength and to tie the bead core in the tire body. It may be a fabric or a reinforced rubber ply.

### Brief Description of the Drawings

The invention will be described by way of example and with reference to the accompanying drawings in which:
Fig. 1 shows the forming of an apex and its attaching to a bead core with a flipper wrapped about the bead core in a first example;
Fig. 2 shows the finished bead core-apex subassembly of the first example on a support surface;
Fig. 3 shows a nozzle in fluid communication with a pumping or extrusion device while discharging a rubber compound onto a rotating support surface to form an apex;
Fig. 4 shows a first step of the forming of an apex and its attaching to a bead core with a flipper wrapped about the bead core in a second example;
Fig. 5 shows a second step of the forming of the apex and its attaching to the bead core with a flipper wrapped about the bead core in the second example;
Fig. 6 shows the finished bead core-apex subassembly of the second example on a support surface;
Fig. 7 shows a top view of an apparatus in accordance with the invention used in the manufacturing of the bead core-apex subassembly of the second example comprising four stations at different locations.

### Detailed Description of Example Embodiments of the Invention

Fig. 1 explains a first example and shows the manufacturing of a bead core-apex subassembly 5. In a first step, an annular bead core 20 with a flipper 21 wrapped about the bead core in such a way that the flipper completely surrounds the bead core 20 or at least essentially surrounds the bead core 20 is placed on a support surface 10 which may be horizontally oriented and which is rotatable about an axis 12 in the indicated direction or in the opposite direction. The annular bead core 20 with the flipper 21 wrapped around the bead core 20 is first placed on a spacer 11 (which may also be called transfer support) and then, together with the spacer 11, put on the support surface 10. The spacer 11 may be a ring-shaped disc made from a metallic material or from a Teflon™ material. If used, the spacer 11 together with the annular bead core 20 is positioned on the support surface 10 which may be made from a metallic material.

The support surface 10 may include a stop or clamping device 13 which serves to allow a precise positioning of the bead core 20 on the support surface 10, and optionally also to clamp the bead core 20 on the support surface 10. The shape of the stop 13 in the contact with the bead core 20 with the flipper 21 wrapped around the bead core 20 may be adapted to the shape of the bead core 20 to provide a kind of stop having a complementary shape to the shape of the bead core 20 with the flipper 21.

After the bead core 20 with the flipper 21 has been put on the support surface 10, either with the spacer 11 or without the spacer 11, an elastomeric material 22 is discharged through a nozzle 51 on the support surface 10 or, if applicable, on the spacer 11 to form an apex 23 from the discharged rubber compound attached to the flipper 21 and, via the flipper 21, to the bead core 20. The rubber compound may be discharged in the form of a strip as indicated in Figure 1 while the support surface 10 rotates about the axis 12.

Fig. 2 shows the final step of the manufacturing of the bead core-apex subassembly 5 showing the completed apex 23 formed from the extruded strips with the stops or clamping devices 13 being in a retracted position so that the spacer 11 may be removed from the support surface 10 together with the finished bead core-apex subassembly 5. The apex 23 may have a substantially triangular shape with a tip 40 and a base 41 of the triangle being in contact with the flipper 21.

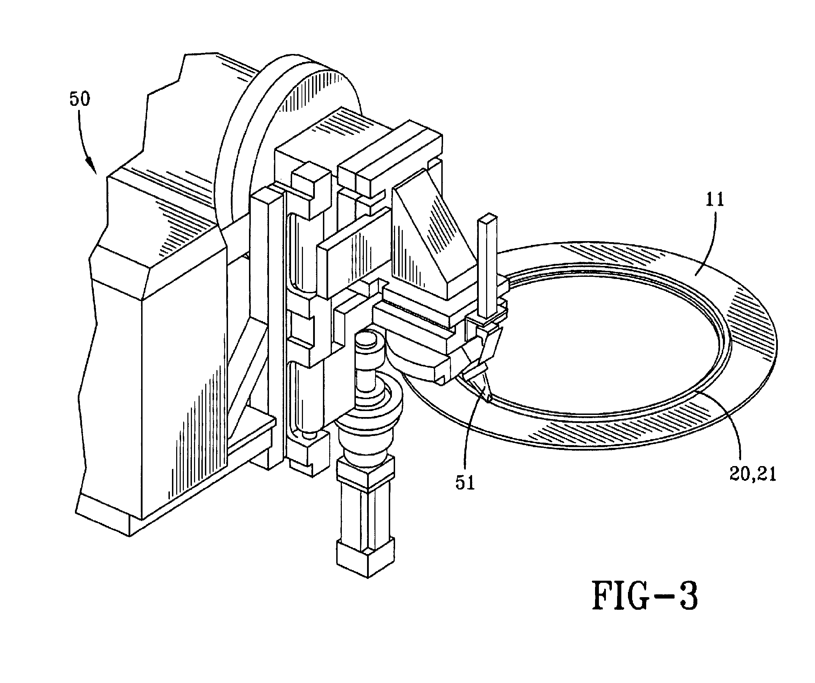

Fig. 3 shows an apparatus 50 for discharging a rubber compound onto the support surface 10 or the spacer 11 through a nozzle 51 while the support surface 10 rotates and an apex 23 is formed from this rubber compound. The nozzle 51 may be in fluid communication with a pumping or extrusion device such as an extruder device followed by a gear pump. The nozzle 51 may comprise a shaping die for shaping the discharged rubber compound into the shape of an apex, i.e., for instance, into a substantially triangular shape as shown in Fig. 2. As the apparatus 50, an apparatus as described in EP 1 418 043 A2, may be used. Alternatively, an apparatus as described in EP 1 749 648 A2 may be used.

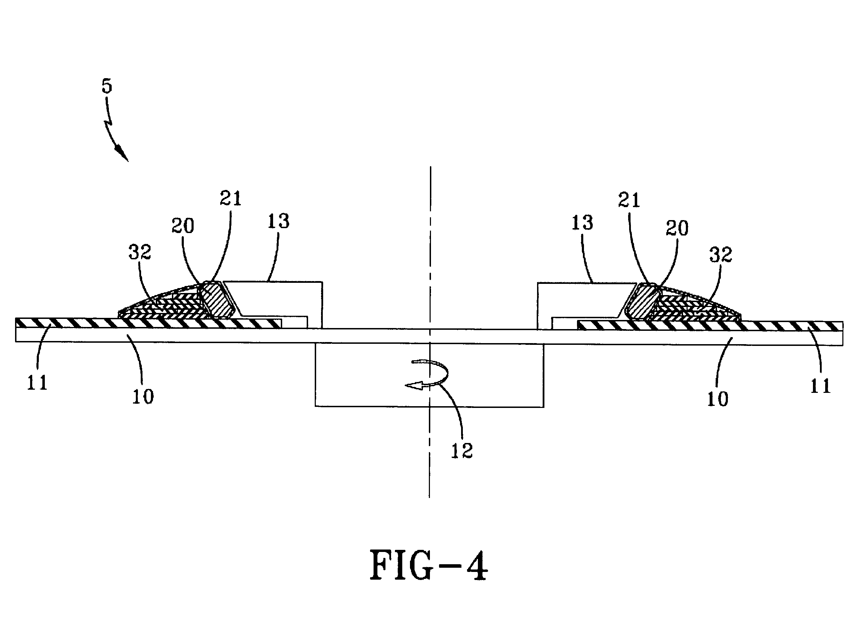

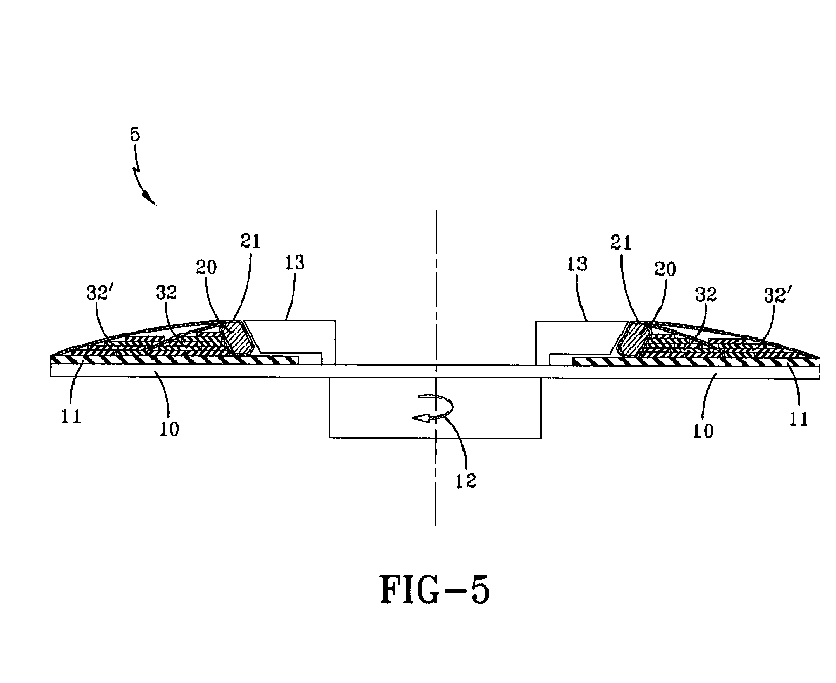

Fig. 4 shows a second example of a bead core-apex subassembly 5. The second example differs from the subassembly of Figs. 1 and 2 by the design of the apex 33 which is in the example described by Figs. 4 to 6 made from two different rubber materials in such a way that the apex 33 comprises a first segment 32 and a second segment 32'. Fig. 4 explains the discharging of the first rubber compound to manufacture the first segment 32. Initially, an annular bead core 20 with a flipper 21 wrapped about the bead core 20 in such a way that the flipper fully surrounds the bead core 20 or at least substantially surrounds the bead core 20 is provided and positioned on the rotatable support surface 10 or, if applicable, on the spacer 11. Then, a first rubber compound in the form of strips is discharged as shown in Fig. 4 while the support surface 10 rotates about the axis 12 to establish the first segment 32. In a further step (see Fig. 5) a second rubber compound is discharged to establish the second segment 32'.

The first segment 32 and the second segment 32' may both have a substantially triangular shape with the second segment 32' forming the tip 40 of the apex 33 and the first segment 32 forming the base 41 of the apex 33 or at least substantially the base 41 of the apex 32 and being in contact with the flipper 21 and thereby with the annular bead core 20.

In order to establish the first and second segments 32, 32', the apparatus 50 shown in Figure 3 may again be used. Two of such apparatuses 50 may be used, one for discharging the rubber compound for the first segment 32 and a second one for discharging the rubber compound of the second segment 32'.

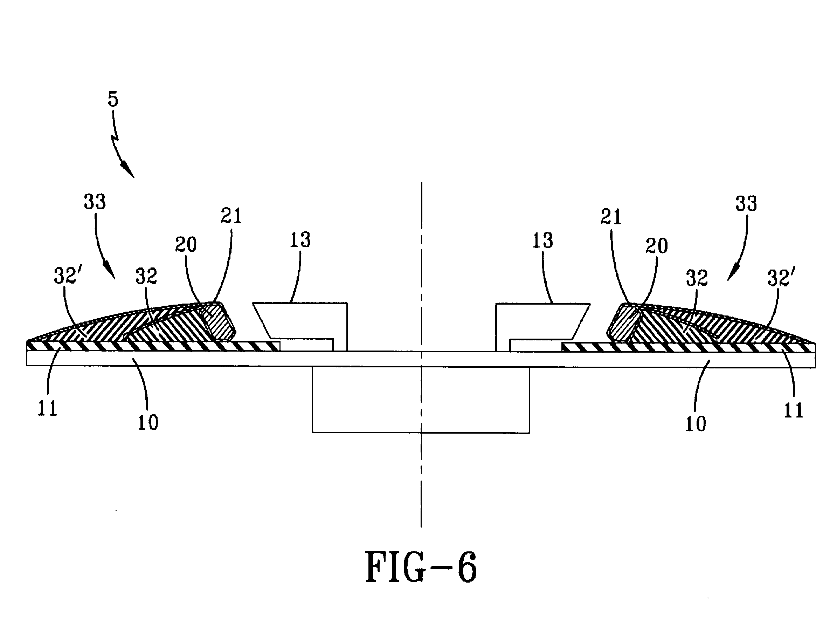

Fig. 6 shows the finished bead core-apex subassembly 5 of the second example with the stop or clamping device 13 being in the retracted position so that the spacer 11 with the subassembly 5 may be removed from the support surface 10 or, if no spacer 11 is used, the finished bead core-apex subassembly may be directly taken off from the support surface 10.

The flipper 21 in the above described first or second example may be a flipper made from a conventional flipper material as commonly used in tire manufacturing, i.e., a fabric or a reinforced rubber ply, for instance.

The first rubber composition used in the second example and the second rubber composition used in the second example may differ in their shore A hardness. In one example, the difference in shore A hardness is at least 3, alternatively at least 5 or at least 10. In another example, the shore A hardness of the first segment is larger, by at least 3 larger than the shore A hardness of the second segment.

The discharge of the elastomeric material(s) for establishing the apex 23 or the first and second segments 32, 32' of the apex 33 is done while the rotatable support 10 is rotated by substantially 360 degrees or by an integer multiple of 360 degrees. During rotation of the support 10 the nozzle 51 is moved radially relative to the annular bead core 20 located on the support surface 10 while discharging the rubber material so that the strips are positioned on the support surface or the spacer 11 as shown in Figures 1, 4 and 5 respectively, i.e., initially laterally adjacent (with or without overlap) and then in a defined layered configuration in order to successively build up the desired shape of the apex 23 or 32 or the respective apex segment 32, 32'.

In alternative examples to Figs. 1-2 and Figs. 4-6, the respective bead core-apex subassembly 5 may also be manufactured without any flipper 21.

In yet further alternative examples to Figs. 1-2 and Figs. 4-6, a flipper may also be partially wrapped about the respective bead core-apex subassembly 5 only after attaching the respective apex 23, 33 to the bead core 20. In these examples the flipper may extend from one lateral side of the respective substantially triangular shaped apex 23, 33 about the bead core 20 to the respective other lateral side of the apex, i.e., the flipper is in contact with both lateral sides of the apex 23, 33 but does not completely enclose the respective bead core 20 so that there is no flipper between the base 41 of the apex and the bead core 20.

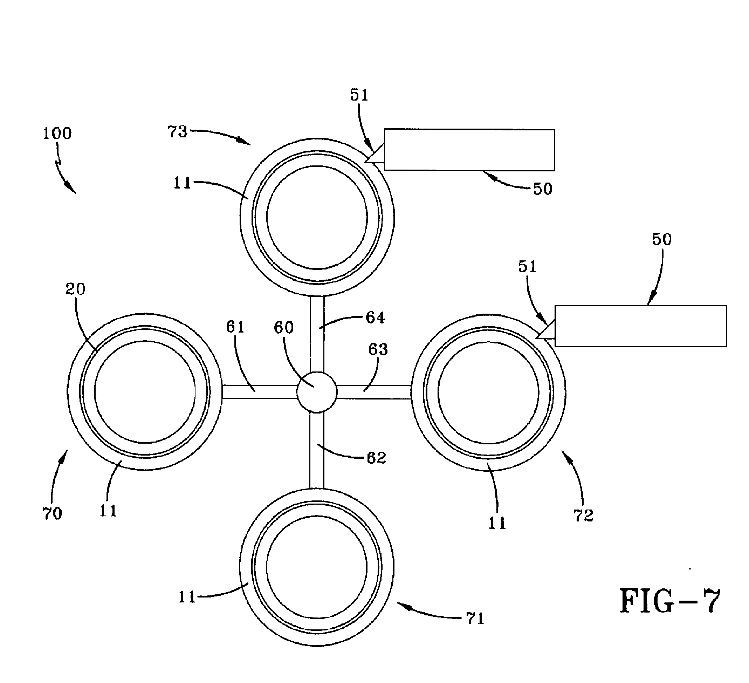

Fig. 7 shows a top view onto an apparatus 100 for manufacturing a bead core-apex subassembly 5 in accordance with the above described examples. The apparatus 100 comprises a plurality of different stations 70, 71, 72, 73 which are rotatable about a center 60. In an example embodiment, one of the stations is a loading station 71, one is an unloading station 70, and one or two of the stations are rubber discharge stations 72, 73. The apparatus 100 of Fig. 7 may be used to manufacture an annular bead core-apex subassembly 5 in accordance with Figs. 1-2 or in accordance with Figs. 4-6. The apparatus 100 may also be used to manufacture a bead core subassembly without a flipper or with a flipper wrapped about the apex only after attaching the apex to the bead core as described above.

In one example, the apparatus 100 comprises at least a first station 71 at a first location having a first support surface and a second station 72 at a second location having a second support surface. The first support surface is mounted to a first support element and is rotatable on the first support element about an axis extending perpendicular to the first support surface. The second support surface is mounted to a second support element and is rotatable on the second support element about an axis extending perpendicular to the second support surface. The apparatus 100 further comprises a moving device configured for moving the first support surface from the first location to the second location and for moving the second support surface from the second location to either the first location or to a further location. The apparatus 100 further comprises at least one handling device selected from the group consisting of (i) a loading device for positioning the annular bead core 20 on the respective support surface at the first location, and (ii) an unloading device for removing the annular bead core-apex subassembly 5 from the respective support surface at the first location. The apparatus 100 also comprises at least a first nozzle 51 in fluid communication with a first pumping or extrusion device 50 for discharging a first rubber compound onto a respective support surface at the second location.

In the example shown in Fig. 7, the apparatus 100 further comprises a third station 73 at a third location having a third support surface. The third support surface is mounted to a third support element and is rotatable on the third support element about an axis extending perpendicular to the third support surface. When using the third station 73, the moving device is configured for moving the first support surface from the first location to the second location, for moving the second support surface from the second location to the third location, and for either moving the third support surface from the third location to the first location or to a further location. In this case, the handling device may be a loading device for positioning the annular bead core 20 on the respective support surface at the first location, and the apparatus 10 then also comprises an unloading device for removing the annular bead core-apex subassembly 5 from a respective support surface at the third location. Alternatively, the apparatus 100 may comprise a second nozzle 51 in fluid communication with a pumping or extrusion device 50 for discharging a second rubber compound onto a respective support surface at the third location.

In the example shown in Fig. 7, the apparatus 100 further comprises a fourth station 70 at a fourth location having a fourth support surface, wherein the fourth support surface is mounted to a fourth support element and is rotatable on the fourth support element about an axis extending perpendicular to the fourth support surface. In this case, the moving device is configured for moving the first support surface from the first location to the second location, for moving the second support surface from the second location to the third location, for moving the third support surface from the third location to the fourth location, and for either moving the fourth support surface to the first location or to a further location. In this example, the handling device is a loading device for positioning the annular bead core 20 on a respective support surface at the first location, and the apparatus 100 comprises an unloading device for removing the finished annular bead core-apex subassembly 5 from a respective support surface at the fourth location. In this example, the apparatus 100 further comprises a second nozzle 51 in fluid communication with a second pumping or extrusion device 50 for discharging a second rubber compound onto a respective support surface at the third location in order to manufacture a bead core-apex subassembly as shown in Fig. 6 with both nozzles 51 discharging different rubber compounds in the form of strips at different locations. Alternatively, the apparatus 100 of such a configuration may also be used to manufacture a bead core-apex subassembly as shown in Fig. 2 discharging the same rubber compound in the form of strips at different locations to faster create the bead core-apex subassembly 5 shown in Fig. 2, i.e., to gain cycle time.

In the example shown in Fig. 7, the first, second, third and fourth support surface may each be a flat, disc-shaped support surface. The first support element may be a first arm 61 extending from the center 60, the second support element is a second arm 62 extending from said center 60, the third support element is a third arm 63 extending from said center 60, and the fourth support element is a fourth arm 64 extending from said center 60. The first, second, third and fourth support elements or arms are rotatable about the center 60. The first, second, third and fourth arm 61, 62, 63, 64 are arranged about the center 60 at an angular distance of substantially 90 degrees. The first, second, third and fourth arm 61, 62, 63, 64 may have a substantially equal length.

In case the apparatus 100 comprises only the first and second station 71, 72 but not the third and fourth station 73, 70, the first and second arm 61, 62 may be arranged about the center 60 at an angular distance of substantially 180 degrees. Alternatively, in case the apparatus 100 comprises four stations, 70, 71, 72, 73, the stations may be arranged in a linear configuration.

In case the apparatus 100 comprises only the first, second and third station 71, 72, 73 but not the fourth station 70, the first, second and third arm 61, 62, 63 may be arranged about the center 60 at an angular distance of substantially 120 degrees.

The loading device of the apparatus 100 may be configured for holding the spacer disc 11 on which the annular bead core 20 is located and for moving this spacer disc 11 together with the annular bead core 20 to the first support surface, thereby positioning the annular bead core 20 on the first support surface.

The unloading device of the apparatus 100 may be configured for holding the spacer disc 11 on which a finished bead core-apex subassembly 5 is located and for removing this spacer disc 11 together with the bead core-apex subassembly 5 from the first support surface.

One or both of the first and second pumping or extrusion devices may comprise a gear pump.

In one example, one or both of the first and second nozzles 51 is configured to provide a rubber compound in the shape of a strip. Alternatively, one or both of the first and second nozzles 51 may comprise a shaping element for bringing the discharged rubber compound into a substantially triangular shape.

The first nozzle 51 of the apparatus 100 may be moveable in a radial direction with respect to the annular bead core 20 at the second station.

The second nozzle of the apparatus 100 may also be moveable in a radial direction with respect to the annular bead core 20 at the third station.

Overall, the example of Fig. 7 allows it to form a dual apex using two nozzles 51 wherein each of the nozzles is associated with a respective extruder device and a gear pump. The nozzles 51 each provide a profiled strip which is applied on the horizontal surface of the respective support surface 10 or spacer 11 while it rotates. The application of the strips made from the first compound is tangential to the outer peripheral surface of the bead core 20 and the application of the strips made from the second compound completes the desired apex shape. During the rotation of the respective support surface 10 or spacer 11, the respective strips may move in an axial direction to successively build the desired contour of the apex 33. With such an approach there is no longer a need for a duplex extruder line with different apex dies per tire size.

As shown in Fig. 7, the respective support surface 10 at the various stations 70, 71, 72, 73 may be oriented horizontally. In case of the use of the spacers 11, the support surfaces may be fixed to the respective support elements or arms 61, 62, 63, 64 so that only the respective spacer 11 needs to be located on and removed from the respective support surface while the support surface is mounted on and connected to the respective arm 61, 62, 63, 64. Each support surface may have a circular cross-section in top view and also each spacer 11, if used, may have a circular cross-section in top view.

If used, the spacers 11 may be fixed to the respective support surface while the support surface rotates and hence rotate together with the respective support surface. In another example, it is also possible to directly rotate the spacers 11 on the respective support surface without rotating the support surface at the same time.

The first station 71 for loading the bead core 20 and the fourth station for unloading the bead core-apex subassembly 5 may be combined into a single station (not shown). Such a design of the apparatus 100 is somewhat simpler but has the disadvantage that its operation is more time-consuming.

The second station 72 for discharging a first rubber compound and the third station 73 for discharging a second or the same rubber compound may be combined into a single station (not shown). In case of such a design of the apparatus 100 there may be even two or more nozzles 51 located about the circumference of the respective station for discharging the same or different rubber compounds.

The first station 71 for loading the bead core 20 and the fourth station for unloading the bead core-apex subassembly 5 may be combined into a single station (not shown). The second station 72 for discharging a first rubber compound and the third station 73 for discharging a second or the same rubber compound may be combined into a single station resulting in an apparatus with only two stations (not shown). Such an apparatus 100 is simpler in its design, requires less space in a plant and may be sufficient for certain applications. Conversely, such an apparatus may be less flexible and may use more time in the manufacture of a bead core-apex subassembly than an apparatus with three stations or an apparatus 100 with four stations, as shown in Fig. 7.

Hence, depending on the specific needs and constraints, such as manufacturing time, apex design, available space in a plant, cost and manufacturing complexity, a two-station apparatus, a three-station apparatus, the four-station apparatus of Fig. 7, or an apparatus with more than four stations , with more than two rubber discharge stations may be used.

## Claims

1. An apparatus for manufacturing an annular bead core-apex subassembly (5), the apparatus (100) comprising a first station (71) at a first location having a first support surface and a second station (72) at a second location having a second support surface, wherein the first support surface is mounted to a first support element (61) and is rotatable on the first support element about an axis extending perpendicular to the first support surface, wherein the second support surface is mounted to a second support element (62) and is rotatable on the second support element about an axis extending perpendicular to the second support surface, wherein the apparatus (100) comprises a moving device configured for moving the first support surface from the first location to the second location and for moving the second support surface from the second location to either r the first location or to a further location, wherein the apparatus (100) comprises at least one handling device selected from the group consisting of (i) a loading device for positioning an annular bead core (20) on the respective support surface at the first location (71), and (ii) an unloading device for removing an annular bead core-apex subassembly (5) from the respective support surface at the first location (71), and wherein the apparatus (100) comprises a first nozzle (51) in fluid communication with a first pumping or extrusion device (50) for discharging a first rubber compound onto a respective support surface at the second location (72), **characterized in that** the loading device is configured for holding a spacer disc (11) on which an annular bead core (20) is located and for moving this spacer disc (11) with the annular bead core (20) to the first support surface thereby positioning the annular bead core with the spacer disk (11) on the first support surface and/or **in that** the unloading device is configured for holding a spacer disc (11) on which a bead core-apex subassembly (5) is located and for removing this spacer disc (11) with the bead core-apex subassembly (5) from the first support surface.

2. The apparatus of claim 1 further comprising a third station (73) at a third location having a third support surface, wherein the third support surface is mounted to a third support element (63) and is rotatable on the third support element about an axis extending perpendicular to the third support surface, wherein the moving device is configured for moving the first support surface from the first location to the second location, for moving the second support surface from the second location to the third location, and for either moving the third support surface from the third location to the first location or to a further location, wherein the handling device is a loading device for positioning an annular bead core (20) on the respective support surface at the first location (71), and wherein the apparatus further comprises an unloading device for removing an annular bead core-apex subassembly (5) from a respective support surface at the third location (73).

3. The apparatus of claim 1 further comprising a third station at a third location (73) having a third support surface, wherein the third support surface is mounted to a third support element and is rotatable on the third support element (63) about an axis extending perpendicular to the third support surface, wherein the moving device is configured for moving the first support surface from the first location to the second location, for moving the second support surface from the second location to the third location, and for either moving the third support surface from the third location to the first location or to a further location, and wherein the apparatus comprises a second nozzle in fluid communication with a pumping or extrusion device for discharging a second rubber compound onto a respective support surface at the third location (73).

4. The apparatus of claim 1 further comprising a third station (73) at a third location having a third support surface, wherein the third support surface is mounted to a third support element (63) and is rotatable on the third support element (63) about an axis extending perpendicular to the third support surface, wherein the apparatus further comprises a fourth station (70) at a fourth location having a fourth support surface, wherein the fourth support surface is mounted to a fourth support element (64) and is rotatable on the fourth support element (64) about an axis extending perpendicular to the fourth support surface, wherein the moving device is configured for moving the first support surface from the first location to the second location, for moving the second support surface from the second location to the third location, for moving the third support surface from the third location to the fourth location, and for either moving the fourth support surface to the first location or to a further location, wherein the handling device is a loading device for positioning an annular bead core (20) on a respective support surface at the first location, wherein the apparatus comprises an unloading device for removing an annular bead core-apex subassembly (5) from a respective support surface at the fourth location (70), and wherein the apparatus (100) comprises a second nozzle in fluid communication with a second pumping or extrusion device for discharging a second rubber compound onto a respective support surface at the third location (73).

5. The apparatus of at least one of the previous claims wherein the first and the second support surface is each a flat, disc-shaped support surface, wherein the first support element is a first arm extending from a center (60), wherein the second support element is a second arm extending from said center, and wherein the first and second support element are rotatable about said center (60).

6. The apparatus of claim 2 or 3 wherein the first, second and third support surface is each a flat, disc-shaped support surface, wherein the first support element is a first arm extending from a center (60), wherein the second support element is a second arm extending from said center, wherein the third support element is a third arm extending from said center, and wherein the first, second and third support element are rotatable about said center (60)

7. The apparatus of claim 4 wherein the first, second, third and fourth support surface is each a flat, disc-shaped support surface, wherein the first support element is a first arm extending from a center (60), wherein the second support element is a second arm extending from said center, wherein the third support element is a third arm extending from said center, wherein the fourth support element is a fourth arm extending from said center, and wherein the first, second, third and fourth support element are rotatable about said center (60).

8. The apparatus of at least one of the previous claims wherein
(i) the first nozzle is configured to provide the first rubber compound in the shape of a strip; and/or
(ii) the first nozzle is moveable in a radial direction with respect to the annular bead core at the second station.

9. The apparatus of at least one of the previous claims wherein
(i) the second nozzle is moveable in a radial direction with respect to the annular bead core at the third station; and/or
(ii) the second nozzle is moveable in a radial direction with respect to the annular bead core at the third station.

10. A method of manufacturing an annular bead core-apex subassembly (5), the method comprising:
positioning an annular bead core (20) on a support surface at a first station (71);
moving the support surface with the annular bead core (20) to a second station (72);
rotating the support surface with the annular bead core (20) at the second station (72) about an axis extending perpendicular to the first support surface;
discharging a first rubber compound onto the rotating support surface at the second station (72);
establishing the annular bead core-apex subassembly (5);
moving the support surface with the annular bead core-apex subassembly (5) to a further station (70);
removing the annular bead core-apex subassembly (5) from the support surface at the further station;
wherein the annular bead core (20) is positioned on a spacer disc (11) and the annular bead core (20) on the spacer disc (11) is positioned on the support surface at the first station (71), and wherein the annular bead core-apex subassembly (5) is established on the spacer disc (11) and removed from the support surface at the further station together with the spacer disc (11).

11. The method of claim 10 wherein the further station is the first station (71) or wherein the further station is an unloading station (70) different from the first station (71).

12. The method of claim 10 or 11 wherein the method comprises:
after discharging the first rubber compound onto the rotating support surface at the second station (72), moving the support surface with the discharged first rubber compound to a third station (73);
rotating the support surface with the annular bead core (20) at the third station (73) about an axis extending perpendicular to the first support surface;
discharging a second rubber compound onto the rotating support surface at the third station (73).

## Patentansprüche

1. Vorrichtung zur Herstellung einer ringförmigen Wulstkern-Kernprofil-Unterbaugruppe (5), wobei die Vorrichtung (100) eine erste Station (71), die eine erste Auflagefläche aufweist, an einer ersten Position umfasst, und eine zweite Station (72), die eine zweite Auflagefläche aufweist, an einer zweiten Position umfasst, wobei die erste Auflagefläche an einem ersten Stützelement (61) montiert ist und an dem ersten Stützelement um eine sich senkrecht zu der ersten Auflagefläche erstreckende Achse drehbar ist, wobei die zweite Auflagefläche an einem zweiten Stützelement (62) montiert ist und an dem zweiten Stützelement um eine sich senkrecht zu der zweiten Auflagefläche erstreckende Achse drehbar ist, wobei die Vorrichtung (100) eine Bewegungsvorrichtung umfasst, die zum Bewegen der ersten Auflagefläche von der ersten Position zu der zweiten Position und zum Bewegen der zweiten Auflagefläche von der zweiten Position entweder zu der ersten Position oder zu einer weiteren Position eingerichtet ist, wobei die Vorrichtung (100) mindestens ein Handhabungsgerät umfasst, das aus der Gruppe ausgewählt ist, bestehend aus (i) einer Beladevorrichtung zum Anordnen eines ringförmigen Wulstkerns (20) auf der jeweiligen Auflagefläche an der ersten Position (71), und (ii) einer Abladevorrichtung zum Entfernen einer ringförmigen Wulstkern-Kernprofil-Unterbaugruppe (5) von der jeweiligen Auflagefläche an der ersten Position (71), und wobei die Vorrichtung (100) eine erste Düse (51) in Fluidverbindung mit einer ersten Pump- oder Extrusionsvorrichtung (50) zum Austragen einer ersten Kautschukverbindung auf eine jeweilige Auflagefläche an der zweiten Position (72) umfasst, **dadurch gekennzeichnet, dass** die Beladevorrichtung dazu eingerichtet ist, eine Distanzscheibe (11), worauf sich ein ringförmiger Wulstkern (20) befindet, zu halten und diese Distanzscheibe (11) mit dem ringförmigen Wulstkern (20) zu der ersten Auflagefläche zu bewegen, wodurch sie den ringförmigen Wulstkern mit der Distanzscheibe (11) auf der ersten Auflagefläche angeordnet, und/oder dass die Abladevorrichtung dazu eingerichtet ist, eine Distanzscheibe (11), worauf sich eine Wulstkern-Kernprofil-Unterbaugruppe (5) befindet, zu halten und diese Distanzscheibe (11) mit der Wulstkern-Kernprofil-Unterbaugruppe (5) von der ersten Auflagefläche zu entfernen.

2. Vorrichtung nach Anspruch 1, weiter eine dritte Station (73), die eine dritte Auflagefläche aufweist, an einer dritten Position umfassend, wobei die dritte Auflagefläche an einem dritten Stützelement (63) montiert ist und an dem dritten Stützelement um eine sich senkrecht zu der dritten Auflagefläche erstreckende Achse drehbar ist, wobei die Bewegungsvorrichtung zum Bewegen der ersten Auflagefläche von der ersten Position zu der zweiten Position, zum Bewegen der zweiten Auflagefläche von der zweiten Position zu der dritten Position, und zum Bewegen der dritten Auflagefläche von der dritten Position entweder zu der ersten Position oder zu einer weiteren Position eingerichtet ist, wobei die Handhabungsvorrichtung eine Beladevorrichtung zum Anordnen eines ringförmigen Wulstkerns (20) auf der jeweiligen Auflagefläche an der ersten Position (71) ist, und wobei die Vorrichtung weiter eine Abladevorrichtung zum Entfernen einer ringförmigen Wulstkern-Kernprofil-Unterbaugruppe (5) von einer jeweiligen Auflagefläche an der dritten Position (73) umfasst.

3. Vorrichtung nach Anspruch 1, weiter eine dritte Station, die eine dritte Auflagefläche aufweist, an einer dritten Position (73) umfassend, wobei die dritte Auflagefläche an einem dritten Stützelement montiert ist und an dem dritten Stützelement (63) um eine sich senkrecht zu der dritten Auflagefläche erstreckende Achse drehbar ist, wobei die Bewegungsvorrichtung zum Bewegen der ersten Auflagefläche von der ersten Position zu der zweiten Position, zum Bewegen der zweiten Auflagefläche von der zweiten Position zu der dritten Position, und zum Bewegen der dritten Auflagefläche von der dritten Position entweder zu der ersten Position oder zu einer weiteren Position eingerichtet ist, und wobei die Vorrichtung eine zweite Düse in Fluidverbindung mit einer Pump- oder Extrusionsvorrichtung zum Austragen einer zweiten Kautschukverbindung auf eine jeweilige Auflagefläche an der dritten Position (73) umfasst.

4. Vorrichtung nach Anspruch 1, weiter eine dritte Station (73), die eine dritte Auflagefläche aufweist, an einer dritten Position umfassend, wobei die dritte Auflagefläche an einem dritten Stützelement (63) montiert ist und an dem dritten Stützelement (63) um eine sich senkrecht zu der dritten Auflagefläche erstreckende Achse drehbar ist, wobei die Vorrichtung weiter eine vierte Station (70), die eine vierte Auflagefläche aufweist, an einer vierten Position umfasst, wobei die vierte Auflagefläche an einem vierten Stützelement (64) montiert ist und an dem vierten Stützelement (64) um eine sich senkrecht zu der vierten Auflagefläche erstreckende Achse drehbar ist, wobei die Bewegungsvorrichtung zum Bewegen der ersten Auflagefläche von der ersten Position zu der zweiten Position, zum Bewegen der zweiten Auflagefläche von der zweiten Position zu der dritten Position, zum Bewegen der dritten Auflagefläche von der dritten Position zu der vierten Position, und zum Bewegen der vierten Auflagefläche entweder zu der ersten Position oder zu einer weiteren Position eingerichtet ist, wobei die Handhabungsvorrichtung eine Beladevorrichtung zum Anordnen eines ringförmigen Wulstkerns (20) auf einer jeweiligen Auflagefläche an der ersten Position ist, wobei die Vorrichtung eine Abladevorrichtung zum Entfernen einer ringförmigen Wulstkern-Kernprofil-Unterbaugruppe (5) von einer jeweiligen Auflagefläche an der vierten Position (70) umfasst, und wobei die Vorrichtung (100) eine zweite Düse in Fluidverbindung mit einer zweiten Pump- oder Extrusionsvorrichtung zum Austragen einer zweiten Kautschukverbindung auf eine jeweilige Auflagefläche an der dritten Position (73) umfasst.

5. Vorrichtung nach mindestens einem der vorgenannten Ansprüche, wobei die erste und die zweite Auflagefläche jede eine flache, scheibenförmige Auflagefläche ist, wobei das erste Stützelement ein sich von einem Mittelpunkt (60) erstreckender erster Arm ist, wobei das zweite Stützelement ein sich von besagtem Mittelpunkt erstreckender zweiter Arm ist, und wobei das erste und zweite Stützelement um besagten Mittelpunkt (60) drehbar sind.

6. Vorrichtung nach Anspruch 2 oder 3, wobei die erste, zweite und dritte Auflagefläche jede eine flache, scheibenförmige Auflagefläche ist, wobei das erste Stützelement ein sich von einem Mittelpunkt (60) erstreckender erster Arm ist, wobei das zweite Stützelement ein sich von besagtem Mittelpunkt erstreckender zweiter Arm ist, wobei das dritte Stützelement ein sich von besagtem Mittelpunkt erstreckender dritter Arm ist und wobei das erste, zweite und dritte Stützelement um besagten Mittelpunkt (60) drehbar sind.

7. Vorrichtung nach Anspruch 4, wobei die erste, zweite, dritte und vierte Auflagefläche jede eine flache, scheibenförmige Auflagefläche ist, wobei das erste Stützelement ein sich von einem Mittelpunkt (60) erstreckender erster Arm ist, wobei das zweite Stützelement ein sich von besagtem Mittelpunkt erstreckender zweiter Arm ist, wobei das dritte Stützelement ein sich von besagtem Mittelpunkt erstreckender dritter Arm ist, wobei das vierte Stützelement ein sich von besagtem Mittelpunkt erstreckender vierter Arm ist und wobei das erste, zweite, dritte und vierte Stützelement um besagten Mittelpunkt (60) drehbar sind.

8. Vorrichtung nach mindestens einem der vorgenannten Ansprüche, wobei
(i) die erste Düse zur Bereitstellung der ersten Kautschukverbindung in Form eines Streifens eingerichtet ist; und/oder
(ii) die erste Düse in Bezug auf den ringförmigen Wulstkern an der zweiten Station in einer radialen Richtung bewegbar ist.

9. Vorrichtung nach mindestens einem der vorgenannten Ansprüche, wobei
(i) die zweite Düse in Bezug auf den ringförmigen Wulstkern an der dritten Station in einer radialen Richtung bewegbar ist; und/oder
(ii) die zweite Düse in Bezug auf den ringförmigen Wulstkern an der dritten Station in einer radialen Richtung bewegbar ist.

10. Verfahren zur Herstellung einer ringförmigen Wulstkern-Kernprofil-Unterbaugruppe (5), wobei das Verfahren umfasst:
Anordnen eines ringförmigen Wulstkerns (20) auf einer Auflagefläche an einer ersten Station (71);
Bewegen der Auflagefläche mit dem ringförmigen Wulstkern (20) zu einer zweiten Station (72);
Rotieren der Auflagefläche mit dem ringförmigen Wulstkern (20) an der zweiten Station (72) um eine sich senkrecht zu der ersten Auflagefläche erstreckende Achse;
Austragen einer ersten Kautschukverbindung auf die rotierende Auflagefläche an der zweiten Station (72);
Erstellen der ringförmigen Wulstkern-Kernprofil-Unterbaugruppe (5);
Bewegen der Auflagefläche mit der ringförmigen Wulstkern-Kernprofil-Unterbaugruppe (5) zu einer weiteren Station (70);
Entfernen der ringförmigen Wulstkern-Kernprofil-Unterbaugruppe (5) von der Auflagefläche an der weiteren Station;
wobei der ringförmige Wulstkern (20) auf einer Distanzscheibe (11) angeordnet wird und der ringförmige Wulstkern (20) auf der Distanzscheibe (11) auf der Auflagefläche an der ersten Station (71) angeordnet wird, und wobei die ringförmige Wulstkern-Kernprofil-Unterbaugruppe (5) auf der Distanzscheibe (11) erstellt und an der weiteren Station zusammen mit der Distanzscheibe (11) von der Auflagefläche entfernt wird.

11. Verfahren nach Anspruch 10, wobei die weitere Station die erste Station (71) ist oder wobei die weitere Station eine andere Abladestation (70) als die erste Station (71) ist.

12. Verfahren nach Anspruch 10 oder 11, wobei das Verfahren umfasst:
nach dem Austragen der ersten Kautschukverbindung auf die rotierende Auflagefläche an der zweiten Station (72), Bewegen der Auflagefläche mit der ausgetragenen ersten Kautschukverbindung zu einer dritten Station (73);
Rotieren der Auflagefläche mit dem ringförmigen Wulstkern (20) an der dritten Station (73) um eine sich senkrecht zu der ersten Auflagefläche erstreckende Achse;
Austragen einer zweiten Kautschukverbindung auf die rotierende Auflagefläche an der dritten Station (73).

## Revendications

1. Appareil pour confectionner un sous-assemblage de tringle de talon annulaire-bourrage sur tringle (5), l'appareil (100) comprenant un premier poste (71) à un premier endroit possédant une première surface de support et un deuxième poste (72) à un deuxième endroit possédant une deuxième surface de support, dans lequel la première surface de support est montée sur un premier élément de support (61) et est rotative sur le premier élément de support autour d'un axe s'étendant perpendiculairement à la première surface de support ; dans lequel la deuxième surface de support est montée sur un deuxième élément de support (62) et est rotative sur le deuxième élément de support autour d'un axe s'étendant perpendiculairement à la deuxième surface de support; dans lequel l'appareil (100) comprend un dispositif mobile configuré pour déplacer la première surface de support depuis le premier endroit jusqu'au deuxième endroit ou pour déplacer la deuxième surface de support du deuxième endroit jusqu'au premier endroit ou jusqu'à un endroit supplémentaire ; dans lequel l'appareil (100) comprend au moins un dispositif de manipulation choisi parmi le groupe constitué par : (i) un dispositif de chargement pour disposer une tringle de talon annulaire (20) sur la surface de support respective au premier endroit (71) et (ii) un dispositif de déchargement pour retirer un sous-assemblage (5) de tringle de talon annulaire-bourrage sur tringle de la surface de support respective au premier endroit (71) ; et dans lequel l'appareil (100) comprend une première buse (51) en communication par fluide avec un premier dispositif de pompage ou d'extrusion (50) pour décharger un premier composé de caoutchouc sur une surface de support respective au deuxième endroit (72), **caractérisé en ce que** le dispositif de chargement est configuré pour maintenir un disque d'écartement (11) sur lequel est située la tringle de talon annulaire (20) et pour déplacer ce disque d'écartement (11) avec la tringle de talon annulaire (20) en direction de la première surface de support pour ainsi positionner la tringle de talon annulaire avec le disque d'écartement (11) sur la première surface de support et/ou **en ce que** le dispositif de déchargement est configuré pour maintenir un disque d'écartement (11) sur lequel est disposé un sous-assemblage (5) de tringle de talon-bourrage sur tringle et pour retirer ce disque d'écartement (11) avec le sous-assemblage (5) de tringle de talon-bourrage sur tringle de la première surface de support.

2. Appareil selon la revendication 1, comprenant en outre un troisième poste (73) à un troisième endroit possédant une troisième surface de support, dans lequel la troisième surface de support est montée sur un troisième élément de support (63) et est rotative sur le troisième élément de support autour d'un axe s'étendant perpendiculairement à la troisième surface de support, dans lequel le dispositif mobile est configuré pour déplacer la première surface de support depuis le premier endroit jusqu'au deuxième endroit, pour déplacer la deuxième surface de support depuis le deuxième endroit jusqu'au troisième endroit, et pour déplacer la troisième surface du support, depuis le troisième endroit jusqu'au premier endroit ou jusqu'à un endroit supplémentaire ; dans lequel le dispositif de manipulation est un dispositif de chargement pour disposer une tringle de talon annulaire (20) sur la surface de support respective au premier endroit (71), et dans lequel l'appareil comprend en outre un dispositif de déchargement pour retirer un sous-assemblage (5) de tringle de talon annulaire-bourrage sur tringle d'une surface de support respective au troisième endroit (73).

3. Appareil selon la revendication 1, comprenant en outre un troisième poste à un troisième endroit (73) possédant une troisième surface de support, dans lequel la troisième surface de support est montée sur un troisième élément de support et est rotative sur le troisième élément de support (63) autour d'un axe s'étendant perpendiculairement à la troisième surface de support, dans lequel le dispositif mobile est configuré pour déplacer la première surface de support depuis le premier endroit jusqu'au deuxième endroit, pour déplacer la deuxième surface de support depuis le deuxième endroit jusqu'au troisième endroit, et pour déplacer la troisième surface du support depuis le troisième endroit jusqu'au premier endroit ou jusqu'à un endroit supplémentaire ; et dans lequel l'appareil comprend une deuxième buse en communication par fluide avec un dispositif de pompage ou d'extrusion pour décharger un deuxième composé de caoutchouc sur une surface de support respective au troisième endroit (73).

4. Appareil selon la revendication 1, comprenant en outre un troisième poste (73) à un troisième endroit possédant une troisième surface de support, dans lequel la troisième surface de support est montée sur un troisième élément de support (63) et est rotative sur le troisième élément de support (63) autour d'un axe s'étendant perpendiculairement à la troisième surface de support; dans lequel l'appareil comprend en outre un quatrième poste (70) à un quatrième endroit possédant une quatrième surface de support, dans lequel la quatrième surface de support est montée sur un quatrième élément de support (64) et est rotative sur le quatrième élément de support (64) autour d'un axe s'étendant perpendiculairement à la quatrième surface de support ; dans lequel le dispositif mobile est configuré pour déplacer la première surface de support depuis le premier endroit jusqu'au deuxième endroit, pour déplacer la deuxième surface de support depuis le deuxième endroit jusqu'au troisième endroit, pour déplacer la troisième surface de support depuis le troisième endroit jusqu'au quatrième endroit, et pour déplacer la quatrième surface de support jusqu'au premier endroit ou jusqu'à un endroit supplémentaire ; dans lequel le dispositif de manipulation est un dispositif de chargement pour disposer une tringle de talon annulaire (20) sur une surface de support respective au premier endroit; dans lequel l'appareil comprend un dispositif de déchargement pour retirer un sous-assemblage (5) de tringle de talon annulaire-bourrage sur tringle depuis une surface de support respective au quatrième endroit (70) ; et dans lequel l'appareil (100) comprend une deuxième buse en communication par fluide avec un deuxième dispositif de pompage ou d'extrusion pour décharger un deuxième composé de caoutchouc sur une surface de support respective au troisième endroit (73).

5. Appareil selon au moins une des revendications précédentes, dans lequel la première et la deuxième surface de support représentent respectivement une surface de support plate en forme de disque ; dans lequel le premier élément de support est un premier bras qui s'étend depuis un centre (60) ; dans lequel le deuxième élément de support représente un deuxième bras s'étendant depuis ledit centre ; et dans lequel le premier et le deuxième élément de support sont rotatifs autour dudit centre (60).

6. Appareil selon la revendication 2 ou 3, dans lequel la première, la deuxième et la troisième surface de support représentent respectivement une surface de support plate en forme de disque ; dans lequel le premier élément de support est un premier bras qui s'étend depuis un centre (60) ; dans lequel le deuxième élément de support représente un deuxième bras s'étendant depuis ledit centre ; dans lequel le troisième élément de support représente un troisième bras s'étendant à partir dudit centre ; et dans lequel le premier, le deuxième et le troisième élément de support sont rotatifs autour dudit centre (60).

7. Appareil selon la revendication 4, dans lequel la première, la deuxième, la troisième et la quatrième surface de support représentent respectivement une surface de support plate en forme de disque ; dans lequel le premier élément de support est un premier bras qui s'étend depuis un centre (60) ; dans lequel le deuxième élément de support représente un deuxième bras s'étendant depuis ledit centre ; dans lequel le troisième élément de support représente un troisième bras s'étendant à partir dudit centre ; dans lequel le quatrième élément de support représente un quatrième bras s'étendant à partir dudit centre ; et dans lequel le premier, le deuxième, le troisième et le quatrième élément de support sont rotatifs autour dudit centre (60).

8. Appareil selon au moins une des revendications précédentes, dans lequel :
(i) la première buse est configurée pour procurer le premier composé de caoutchouc sous la forme d'une bande ; et/ou
(ii) la première buse est mobile dans une direction radiale par rapport à la tringle de talon annulaire au deuxième poste.

9. Appareil selon au moins une des revendications précédentes, dans lequel :
(i) la deuxième buse est mobile dans une direction radiale par rapport à la tringle de talon annulaire au troisième poste ; et/ou
(ii) la deuxième buse est mobile dans une direction radiale par rapport à la tringle de talon annulaire au troisième poste.

10. Procédé de confection d'un sous-assemblage (5) de tringle de talon annulaire-bourrage sur tringle, le procédé comprenant le fait de:
positionner une tringle de talon annulaire (20) sur une surface de support à un premier poste (71) ;
déplacer la surface de support avec la tringle de talon annulaire (20) jusqu'à un deuxième poste (72) ;
faire tourner la surface de support avec la tringle de talon annulaire (20) au deuxième poste (72) autour d'un axe s'étendant perpendiculairement à la première surface de support ;
décharger un premier composé de caoutchouc sur la surface de support rotative au deuxième poste (72) ;
former le sous-assemblage (5) de tringle de talon annulaire-bourrage sur tringle ;
déplacer la surface de support avec le sous-assemblage (5) de tringle de talon annulaire-bourrage sur tringle jusqu'à un poste supplémentaire (70) ;
retirer le sous-assemblage (5) de tringle de talon annulaire-bourrage sur tringle de la surface de support au poste supplémentaire ;
dans lequel le la tringle de talon annulaire (20) est disposée sur un disque d'écartement (11) et la tringle de talon annulaire (20) sur le disque d'écartement (11) est disposée sur la surface de support au premier poste (71) ; et dans lequel le sous-assemblage (5) de tringle de talon annulaire-bourrage sur tringle est formé sur le disque d'écartement (11) et est retiré de la surface de support au poste supplémentaire, conjointement avec le disque d'écartement (11).

11. Procédé selon la revendication 10, dans lequel le poste supplémentaire représente le premier poste (71) ou bien dans lequel le poste supplémentaire représente un poste de déchargement (70) différent du premier poste (71).

12. Procédé selon la revendication 10 ou 11, dans lequel le procédé comprend le fait de :
après le déchargement du premier composé de caoutchouc sur la surface de support rotative au deuxième poste (72), déplacer la surface de support avec le premier composé de caoutchouc déchargé en direction d'un troisième poste (73) ;
faire tourner la surface de support avec la tringle de talon annulaire (20) au troisième poste (73) autour d'un axe s'étendant perpendiculairement à la première surface de support ;
décharger un deuxième composé de caoutchouc sur la surface de support rotative au troisième poste (73).
